# EUROPEAN PATENT APPLICATION

(11) **EP 2 172 320 A1**
(43) Date of publication of application: **07.04.2010**
(21) Application number: 08740087.5
(22) Date of filing: 09.04.2008
(51) Int. Cl.: B29C 33/38, B29C 59/02

(54) **MOLD, METHOD FOR PRODUCTION OF THE MOLD, AND METHOD FOR PRODUCTION OF SUBSTRATE HAVING REPLICATED FINE PATTERN**

(30) Priority: 24.05.2007 JP 2007137699
(71) Applicant: Asahi Glass Company, Limited, Chiyoda-ku Tokyo 100-8405 (JP)
(72) Inventor: TSUNOZAKI, Kentaro, Tokyo 100-8405 (JP); KAWAGUCHI, Yasuhide, Tokyo 100-8405 (JP); SAKANE, Yoshihiko, Tokyo 100-8405 (JP); SHOJI, Shuichi, Tokyo 169-8555 (JP); MIZUNO, Jun, Tokyo 169-8555 (JP); KATAZA, Shingo, Tokyo 169-8555 (JP)
(74) Representative: Müller-Boré & Partner Patentanwälte
(86) International application number: PCT/JP2008/056984
(87) International publication number: WO 2008/146542

(57) **Abstract**

To provide a mold having optical transparency, release properties, mechanical strength, dimension stability and a highly precise micropattern, and having less deformation of the micropattern; and a process for producing a base material with a transferred micropattern having less deformation of the transferred micropattern, capable of transferring highly precise micropattern of the mold.
A mold 10 comprising a transparent substrate (A)12 having chemical bonds based on the functional groups (x) on the surface having an interlayer (C)14 formed, having a difference in linear expansion coefficient (absolute value) of less than 30 ppm/°C from the linear expansion coefficient of the following fluoropolymer (I), and further having a heat distortion temperature of from 100 to 300°C; an interlayer (C)14 made of a fluoropolymer (II) having a fluorinated alicyclic structure in its main chain and further having reactive groups (y) reactive with the functional groups (x); and a surface layer (B)16 having a micropattern on the surface, made of a fluoropolymer (I) having a fluorinated alicyclic structure in its main chain and having substantially no reactive groups (y).

## Description

### TECHNICAL FIELD

The present invention relates to a mold, a process for its production, and a process for producing a base material having a transferred micropattern, made of a cured product of a photocurable resin, which employs the mold.

### BACKGROUND ART

In recent years, attention has been drawn to a method, so-called a nano imprint method, wherein a base material is contacted with a mold having a micropattern on its surface to form on the base material surface a reversed pattern of the micropattern (Patent Documents 1 and 2). Particularly, attention has been drawn to a process for producing a base material having a transferred micropattern, which comprises sequentially carrying out a step of interposing a photocurable resin between the micropattern surface of the mold and a base material, a step of irradiating the photocurable resin with light to cure the photocurable resin thereby to form a cure product, and a step of releasing the cured product from the mold.

As the mold to be used for such a process, the following mold has been proposed.
(1) A mold made of quartz
(2) A mold made of a tetrafluoroethylene polymer, an ethylene/tetrafluoroethylene copolymer or a perfluoroalkoxyvinyl ether polymer (Patent Document 3)
(3) A mold comprising a transparent substrate (A), a surface layer (B) which is made of a fluoropolymer having a fluorinated alicyclic structure in its main chain and which has a micropattern on the surface, and an interlayer (C) which is present between the transparent substrate (A) and the surface layer (B) (Patent Document 4).

The mold (1) has low release properties, whereby the precision of the transferred micropattern of the cured product tends to deteriorate at the time of releasing the mold from the cured product. As a method to improve the release properties, a method of applying a release agent on the micropattern surface of the mold has been proposed. However, due to irregularities in thickness of the applied release agent, the precision of the micropattern of the mold tends to deteriorate. Further, when the mold is used continuously, it is necessary to reapply the release agent, and the production efficiency tends to be low.

Though the mold (2) is excellent in the release properties, such a mold is obtained by molding a specific fluoropolymer, whereby the mechanical strength and the dimension stability are inadequate.

In the mold (3), when an inorganic material (quartz, glass, translucent ceramics, etc.) is used for the transparent substrate (A), there are advantages such as high dimension stability, mechanical strength and flatness. However, the inorganic material has drastically lower thermal expansion coefficient than the fluoropolymer, and therefore in a step of forming a surface layer (B), the stress tends to be formed due to the difference in thermal expansion coefficient between the transparent substrate (A) and the surface layer (B), and the micropattern tends to be deformed.
Patent Document 1: JP-A-2004-504718
Patent Document 2: JP-A-2002-539604
Patent Document 3: JP-A-2005-515617
Patent Document 4: WO2006/059580

### DISCLOSURE OF THE INVENTION

### PROBLEMS TO BE SOLVED BY THE INVENTION

The present invention provides a mold having high optical transparency, high release properties, high mechanical strength, high dimension stability and a highly precise micropattern, and having less distortion of the micropattern; a production process thereof; and a process for producing a base material with a transferred micropattern capable of transferring a micropattern of the mold with high precision and further having less distortion of the transferred micropattern.

### MEANS TO SOLVE THE PROBLEMS

The mold of the present invention is a mold having a micropattern for molding a photocurable resin, which comprises the following transparent substrate (A); the following surface layer (B); and the following interlayer (C) which is formed on the surface of the transparent substrate (A) and present between the transparent substrate (A) and the surface layer (B):

Transparent substrate (A): a transparent substrate having functional groups (x) on the surface before the interlayer (C) is formed on its surface and having chemical bonds based on the above functional groups (x) and the following reactive groups (y) on the surface after the interlayer (C) is formed on its surface, having a difference in linear expansion coefficient (absolute value) of less than 30 ppm/°C from the linear expansion coefficient of the following fluoropolymer (I), and further having a heat distortion temperature of from 100 to 300°C

Surface layer (B): a layer made of a fluoropolymer (I) having a fluorinated alicyclic structure in its main chain and having substantially no reactive groups (y) as mentioned below, and having a micropattern on its surface

Interlayer (C): a layer made of a fluoropolymer (II) having a fluorinated alicyclic structure in its main chain and further having reactive groups (y) reactive with the functional groups (x).

It is preferred that the transparent substrate (A) has a flat plate-shape and has a thickness of at least 0.4 mm and less than 20 mm.

It is preferred that the micropattern is constituted by a concavo-convex structure wherein the average height of convex portions in the concavo-convex structure is from 1 nm to 500 µm.

It is preferred that the functional groups (x) are hydroxyl groups, amino groups or oxiranyl groups, and the reactive groups (y) are carboxyl groups.

It is preferred that the functional groups (x) are hydroxyl groups, and the reactive groups (y) are silanol groups or C₁₋₄ alkoxysilane groups.

It is preferred that the fluoropolymer (I) has an intrinsic viscosity of from 0.1 to 1.0 dL/g.

It is preferred that the fluoropolymer (II) has an intrinsic viscosity of from 0.1 to 1.0 dL/g.

It is preferred that the transparent substrate (A) has a transmittance of light within at least one portion of a wavelength of from 300 to 500 nm being at least 75%.

It is preferred that the transparent substrate (A) is a transparent substrate having functional groups (x) introduced to the surface by surface treatment.

The process for producing a mold of the present invention is a process for producing a mold having a micropattern for molding a photocurable resin, which comprises,
a step of coating the surface of the transparent substrate (A) having functional groups (x) on the surface, with a solution obtained by dissolving the following fluoropolymer (II) in a fluorine-containing solvent, followed by drying to form an interlayer (C) made of the fluoropolymer (II), a step of coating the surface of the interlayer (C) with a solution obtained by dissolving the above fluoropolymer (I) in a fluorine-containing solvent, followed by drying to form a layer (B^{P}) made of the fluoropolymer (I), a step of pressing a reversed pattern of a master mold having on its surface the reversed pattern of the micropattern, on the layer (B^{P}), and a step of releasing the master mold from the layer (B^{P}) to form a surface layer (B) made of the fluoropolymer (I) having a transferred micropattern of the master mold.

The process for producing a base material having a transferred micropattern of the present invention comprises, a step of disposing a photocurable resin on the surface of a base material, a step of pressing the mold of the present invention on the photocurable resin so that the micropattern of the mold is in contact with the photocurable resin, a step of irradiating the photocurable resin with light in a state where the mold is pressed on the photocurable resin to cure the photocurable resin thereby to obtain a cured product, and a step of releasing the mold from the cured product.

The process for producing a base material having a transferred micropattern of the present invention comprises, a step of disposing a photocurable resin on the surface of a micropattern of the mold of the present invention, a step of pressing a base material on the photocurable resin on the surface of the mold, a step of irradiating the photocurable resin with light in a state where the base material is pressed on the photocurable resin to cure the photocurable resin thereby to obtain a cured product, and a step of releasing the mold from the cured product.

The process for producing a base material having a transferred micropattern of the present invention comprises, a step of bringing a base material and the mold of the present invention close to or in contact with each other so that the micropattern of the mold is located on the base material side, a step of filling a photocurable resin between the base material and the mold, a step of irradiating the photocurable resin with light in a state where the base material and the mold are close to or in contact with each other to cure the photocurable resin thereby to obtain a cured product, and a step of releasing the mold from the cured product.

### EFFECTS OF THE INVENTION

The mold of the present invention has high optical transparency, high release properties, high mechanical strength, high dimension stability and a highly precise micropattern, and has less distortion of the micropattern.

According to the process for producing a mold of the present invention, it is possible to produce a mold having high optical transparency, high release properties, high mechanical strength, high dimension stability and a highly precise micropattern, and having less distortion of the micropattern.

According to the process for producing a base material with a transferred micropattern, it is possible to transfer a micropattern of the mold with good dimensional precision and achieve less distortion of the micropattern.

### BRIEF DESCRIPTION OF THE DRAWINGS

Fig. 1 is a cross section illustrating one example of the mold of the present invention.
Fig. 2 is a cross section illustrating one example of the process for producing a base material having a transferred micropattern.
Fig. 3 is a cross section illustrating another example of the process for producing a base material having a transferred micropattern.
Fig. 4 is a cross section illustrating another example of the process for producing a base material having a transferred micropattern.

### MEANINGS OF SYMBOLS

10: mold
12: transparent substrate (A)
14: interlayer (C)
16: surface layer (B)
18: micropattern
20: photocurable resin
30: base material

### BEST MODE FOR CARRYING OUT THE INVENTION

In the present specification, a compound represented by the formula (1) will be referred to as a compound (1). The same applies to compounds represented by other formulae.

### <Mold>

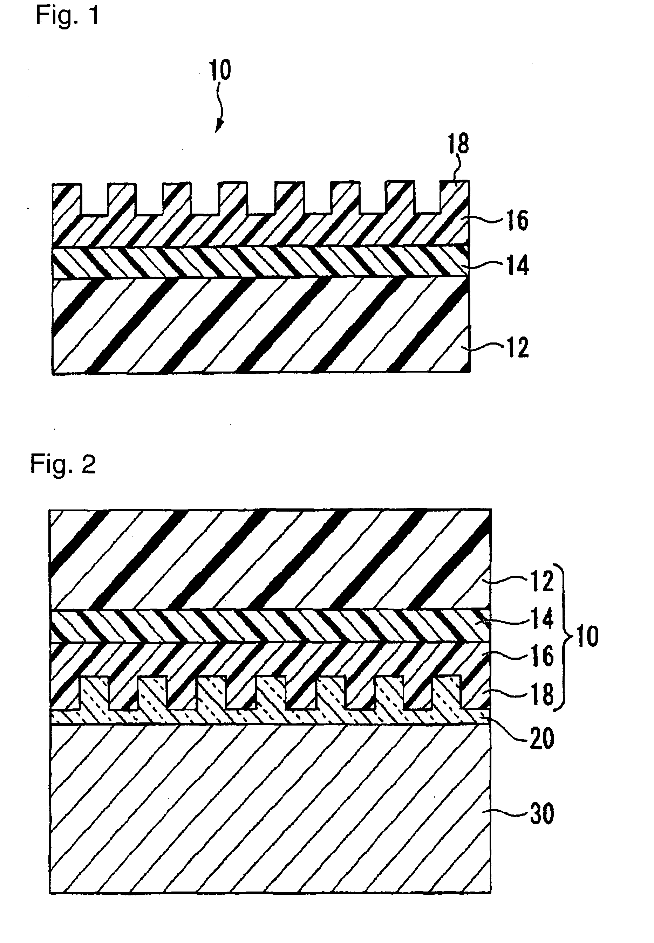

The mold of the present invention is a mold having a micropattern for molding a photocurable resin. Fig. 1 is a cross section illustrating one example of the mold of the present invention. The mold 10 has a transparent substrate (A)12, a surface layer (B)16 having the micropattern 18, and an interlayer (C)14 which is formed on the surface of the transparent substrate (A)12 and present between the transparent substrate (A)12 and the surface layer (B) 16.

### (Transparent Substrate (A))

The transparent substrate (A) is a transparent substrate having functional groups (x) on the surface before the interlayer (C) is formed on its surface and having chemical bonds based on the above functional groups (x) and the reactive groups (y) on the surface after the interlayer (C) is formed on its surface, having a difference in linear expansion coefficient (absolute value) of less than 30 ppm/°C from the linear expansion coefficient of the fluoropolymer (I) and further having a heat distortion temperature of from 100 to 300°C.

The difference in linear expansion coefficient (absolute value) between the transparent substrate (A) and the fluoropolymer (I) is less than 30 ppm/°C, preferably less than 20 ppm/°C. When such a difference (absolute value) is less than 30 ppm/°C, in a step of forming the surface layer (B), it is possible to suppress the stress formed between the transparent substrate (A) and the surface layer (B), and lower the distortion of a micropattern. Especially, it is effective in the case of producing a large-scaled mold where the problem of stress due to the difference in linear expansion coefficient becomes distinct.

The linear expansion coefficient is obtained by the following method.

In accordance with American Society for Testing and Material (ASTM) standard E831, the expansion amount is measured under a condition of a heating rate of 5°C/min by using a thermomechanical analysis device (TMA), whereby the linear expansion coefficient in a range of from 40 to 100°C is obtained.

Further, in the present invention, the thermal expansion coefficient of the interlayer (C) is considered to be less influential from the following three reasons.
(i) Similarly to the surface layer (B), the interlayer (C) is formed from a fluoropolymer, and therefore the thermal expansion coefficient of the interlayer (C) and that of the surface layer (B) is almost the same in many cases.
(ii) A micropattern is not formed on the interlayer (C) but formed on the surface layer (B).
(iii) The role of the interlayer (C) is to improve the adhesion between the surface layer (B) and the transparent substrate (A), and therefore its thickness is usually thinner than the surface layer (B).

The linear expansion coefficient of the transparent substrate (A) is preferably at least 40 ppm/°C and less than 100 ppm/°C, more preferably at least 50 ppm/°C and less than 90 ppm/°C, furthermore preferably at least 55 ppm/°C and less than 85 ppm/°C, particularly preferably at least 55 ppm/°C and less than 75 ppm/°C. When the linear expansion coefficient of the transparent substrate (A) is at least 40 ppm/°C, the molding processability of the transparent substrate (A) and the transmittance of light will be good. When the linear expansion coefficient of the transparent substrate (A) is less than 100 ppm/°C, a heat distortion temperature of the transparent substrate (A) will be sufficiently high.

The heat distortion temperature of the transparent substrate (A) is from 100 to 300°C, preferably from 120 to 300°C. When the heat distortion temperature of the transparent substrate (A) is at least 100°C, it is possible to form the surface layer (B) while maintaining the shape of the transparent substrate (A). The upper limit of the heat distortion temperature is 300°C since it is difficult to obtain a transparent substrate having a heat distortion temperature of higher than 300°C and having a difference in linear expansion coefficient (absolute value) of less than 30 ppm/°C from the linear expansion coefficient of the fluoropolymer (I). From the viewpoint of material cost or molding cost, the heat distortion temperature of the transparent substrate (A) is preferably less than 250°C, more preferably less than 200°C.

The heat distortion temperature is measured in accordance with ASTM D648 under a load of 1.82 MPa.

As a material for the transparent substrate (A), it is preferred to have a transmittance of light being at least 75%, more preferably at least 85% within a wavelength range of at least one portion in a wavelength range of from 300 to 500 nm. When the transmittance of light is at least 75%, it is possible to efficiently cure a photocurable resin in an after-mentioned process for producing a substrate having a transferred micropattern. Particularly, the material preferably has a transmittance of light being at least 75%, more preferably at least 85% at a wavelength of 436 nm (wavelength of g-line of a high-pressure mercury lamp) or 365 nm (wavelength of i-line of high-pressure mercury lamp). When the transmittance of light at a wavelength of 436 nm or 365 nm is at least 75%, it is possible to efficiently cure a photocurable resin by using a high-pressure mercury lamp in an after-mentioned process for producing a substrate having a transferred micropattern.

The transmittance of light means the transmittance of light of a material in the same thickness as in the transparent substrate (A).

As the material for the transparent substrate (A), a transparent resin is preferred since in the case of an inorganic material (such as quartz, glass or translucent ceramics), the linear expansion coefficient is usually within a range of from 0 to 15 ppm/°C, and it is difficult to obtain a material having a small difference in linear expansion coefficient. By using a transparent resin having a difference in linear expansion coefficient (absolute value) of less than 30 ppm/°C from the linear expansion coefficient of the fluoropolymer (I) as the material for the transparent substrate (A), it is possible to suppress the stress formed between the transparent substrate (A) and the surface layer (B) and reduce distortion of a micropattern as compared with a case where an inorganic material is used for the transparent substrate (A).

Another advantage of using a transparent resin for the transparent substrate (A) is that since the hardness of the transparent resin is lower than the inorganic material, not the master mold but the transparent substrate (A) is distorted due to foreign matters included between the master mold and a layer (B^{P}) at the time of pressing the master mold on the layer (B^{P}) in the after-mentioned step M3, thereby to prevent damage to such an expensive master mold.

As the transparent resin, polycarbonate (hereinafter referred to as PC), polyethylene terephthalate (hereinafter referred to as PET), polybutylene terephthalate (PBT), polyethylene naphthalate (PEN), fluorene type polyester, a cycloolefin type resin (hereinafter referred to as COP), polyacrylate (PAR), aromatic polyether ether ketone (PEEK), an aromatic polyether sulfone (PES), an entirely aromatic polyketone, a fluororesin, a silicone resin, an acryl resin, an epoxy resin or a phenol resin may, for example, be mentioned. From the viewpoint of transmittance of light, mold processability or heat resistance, PC or COP is preferred, and from the following reason, COP is particularly preferred.

A transparent resin having no cyclic structure has no stiffness in its main chain, whereby the heat distortion temperature tends to be insufficient. On the other hand, a transparent resin having an aromatic ring has stiffness and a high heat distortion temperature, but the aromatic ring tends to be deteriorated by ultraviolet rays and thereby to have poor light resistance, and a mold may not be used for a long term due to yellowing or brittleness of the transparent resin. COP having an alicyclic structure can achieve both of high heat distortion temperature and light resistance.

As a specific example of PC, Panlite (manufactured by TEIJIN CHEMICALS LTD), Iupilon (manufactured by Mitsubishi Engineering-Plastics Corporation) or Calibre (manufactured by Sumitomo Dow Limited) may be mentioned.

As a specific example of COP, ARTON (manufactured by JSR Corporation), APEL (manufactured by Mitsui Chemicals, Inc.), APO (manufactured by Mitsui Chemicals, Inc.), ZEONEX (manufactured by ZEON CORPORATION), ZEONOR manufactured by ZEON CORPORATION) or a cyclohexadiene type polymer (manufactured by Asahi Kasei Corporation) may, for example, be mentioned.

The transparent substrate (A) may contain a transparent inorganic filler such as silica or alumina as long as it does not adversely affect the light transmittance or mold processability. In the case of containing such an inorganic filler, it is expected that the heat resistance or mechanical strength is improved.

The transparent substrate (A) may have a flat plate-shape (quadrangular shape or disk shape), a film shape or curved surface shape (lens shape, cylindrical shape, columnar shape, etc.).

When the transparent substrate (A) has a flat plate-shape, the thickness of the transparent substrate (A) is preferably at least 0.4 mm and less than 20 mm, more preferably at least 0.5 mm and less than 15 mm, particularly preferably at least 0.5 mm and less than 8 mm. When the thickness of the transparent substrate (A) is at least 0.4 mm, the mold will be hardly flexed, and it is possible to handle it similarly in a case where e.g. quartz or glass is used as a transparent substrate. When the thickness of the transparent substrate (A) is less than 20 mm, it is possible to reduce waste of materials, and reduce weight, whereby handling efficiency will be good.

Even when the thickness of the transparent substrate (A) is less than 0.4 mm, the handling efficiency will be improved by attaching it to a stiff support. The support may have a flat plate-shape or a cylindrical shape.

The functional groups (x) are preferably hydroxyl groups, oxiranyl groups or amino groups. The functional groups (x) may be functional groups derived from the material of the transparent substrate (A) or functional groups imparted on the surface of the transparent substrate (A) by surface treatment to introduce functional groups (x). The latter functional groups are preferred since it is possible to optionally control the type and the amount of the functional groups (x).

The method for surface treatment to introduce functional groups (x) is preferably a method of treating the surface of the transparent substrate (A) with a silane coupling agent having a functional group (x), a method of treating the surface of the transparent substrate by plasma treatment, a method of treating the surface of the transparent substrate (A) by graft polymerization treatment, a method of treating the surface of the transparent substrate (A) by UV ozone treatment or a method of applying a primer having a functional group (x) on the transparent substrate (A).

The silane coupling agent having a functional group (x) is preferably the following compound.

Silane coupling agent having an amino group: aminopropyl triethoxysilane, aminopropylmethyl diethoxysilane, aminoethyl-aminopropyl trimethoxysilane, aminoethyl-aminopropylmethyl dimethoxysilane, etc.

Silane coupling agent having an oxiranyl group: glycidoxypropyl trimethoxysilane, glycidoxypropylmethyl dimethoxysilane, etc.

When the interlayer (C) is formed on the surface of the transparent substrate (A), some or all of the functional groups (x) will form chemical bonds with some or all of the reactive groups (y) of the fluoropolymer (II). In a case where some of functional groups (x) of the transparent substrate (A) form chemical bonds, the transparent substrate (A) in the mold of the present invention still has functional groups (x). On the other hand, in a case where all of the functional groups (x) of the transparent substrate (A) form chemical bonds, the transparent substrate (A) in the mold of the present invention has no functional groups (x).

In any case, on the surface of the transparent substrate (A) after forming the interlayer (C), chemical bonds formed from the functional groups (x) and the reactive groups (y) are present. Such chemical bonds may, for example, be ester bonds in a case where the reactive groups (y) are carboxyl groups and the functional groups (x) are hydroxyl groups or oxiranyl groups, or amide bonds in a case where the reactive groups (y) are carboxyl groups and the functional groups (x) are amino groups. Further, such chemical bonds may, for example, be chemical bonds in a case where the reactive groups (y) are silanol groups or C₁₋₄ alkoxysilane groups and the functional groups (x) are hydroxyl groups. Thus, in the mold of the present invention, the transparent substrate (A) and the interlayer (C) are firmly bonded via the chemical bonds.

### (Surface Layer (B))

The surface layer (B) is a layer made of a fluoropolymer (I) having a fluorinated alicyclic structure in its main chain and having substantially no reactive groups (y) as mentioned below, and having a micropattern on its surface.

The fluoropolymer (I) having a fluorinated alicyclic structure in its main chain is an amorphous or non-crystalline polymer.

"Having a fluorinated alicyclic structure in its main chain" means one or more carbon atoms constituting the ring of the fluorinated alicyclic ring in the polymer are carbon atoms constituting the main chain of the polymer. Atoms constituting the ring of the fluorinated alicyclic ring may include oxygen atoms, nitrogen atoms, etc. in addition to the carbon atoms. A preferred fluorinated alicyclic ring is a fluorinated alicyclic ring having one or two oxygen atoms. The number of atoms constituting the fluorinated alicyclic ring is preferably from 4 to 7.

The carbon atoms constituting the main chain derive from carbon atoms of polymerizable double bonds in the case of a polymer obtained by polymerizing a cyclic monomer, and they derive from four carbon atoms of two polymerizable double bonds in the case of a polymer obtained by cyclopolymerization of a diene monomer.

The cyclic monomer is a monomer having a fluorinated alicyclic ring and having a polymerizable double bond between the carbon atom-carbon atom constituting such a fluorinated alicyclic ring, or a monomer having a fluorinated alicyclic ring and having a polymerizable double bond between a carbon atom constituting such a fluorinated alicyclic ring and a carbon atom other than the fluorinated alicyclic ring.

The diene monomer is a monomer having two polymerizable double bonds.

In the cyclic monomer and the diene monomer, the proportion of the number of fluorine atoms bonded to carbon atoms to the total number of hydrogen atoms bonded to the carbon atoms and fluorine atoms bonded to the carbon atoms, is preferably at least 80%, particularly preferably 100%, in each case.

The cyclic monomer is preferably the compound (1) or the compound (2). 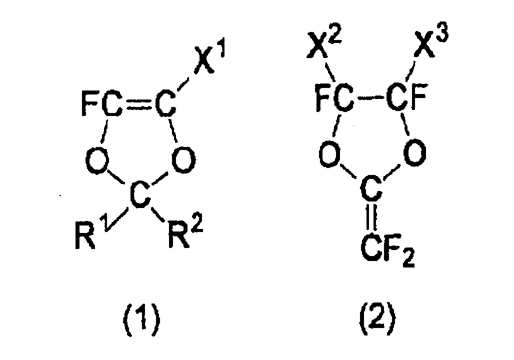 wherein X¹ is a fluorine atom or a C₁₋₃ perfluoroalkoxy group, each of R¹ and R² is a fluorine atom or a C₁₋₆ perfluoroalkyl group, and each of X² and X³ are fluorine atom or a C₁₋₉ perfluoroalkyl group.

As specific examples of the compound (1), the compounds (1-1) to (1-3) may be mentioned.

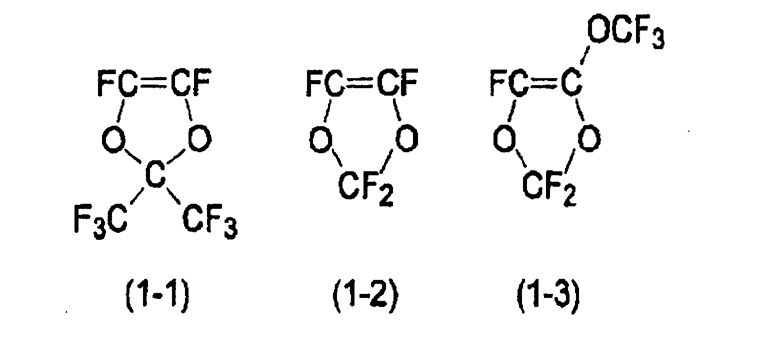

As specific examples of the compound (2), compounds (2-1) and (2-2) may be mentioned.

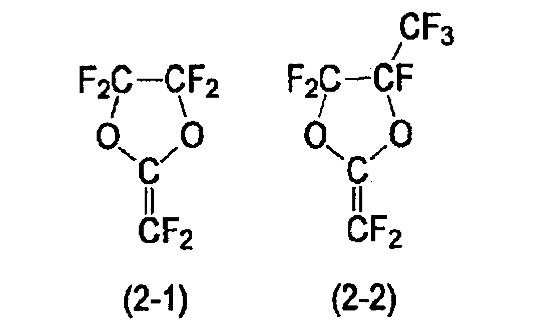

The diene monomer is preferably the compound (3).

CF₂=CF-Q-CF=CF₂ (3)

Here, Q is a C₁₋₃ perfluoroalkylene group (which may have an etheric oxygen atom). In the case of a perfluoroalkylene group having an etheric oxygen atom, the etheric oxygen atom may be present at one terminal of the group, or at each terminal of the group or between carbon atoms in the group. From the viewpoint of the cyclopolymerizability, it is preferably present at one terminal of the group.

By the cyclopolymerization of the compound (3), it is possible to obtain a fluoropolymer having at least one repeating unit of monomer (in the present invention, simply referred to as "monomer unit") among the following (α) to (γ).

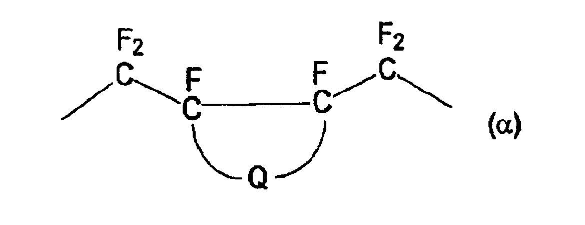

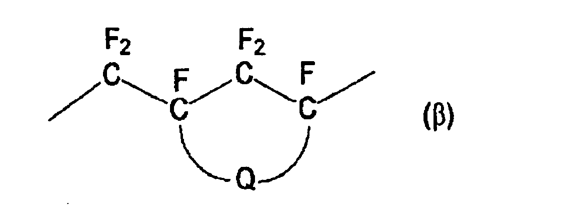

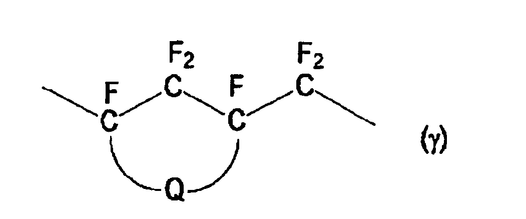

As specific examples of the compound (3), compounds (3-1) to (3-9) may be mentioned.

CF₂=CFOCF₂CF=CF₂ (3-1),

CF₂=CFOCF(CF₃)CF=CF₂ (3-2),

CF₂=CFOCF₂CF₂CF=CF₂ (3-3),

CF₂=CFOCF(CF₃)CF₂CF=CF₂ (3-4),

CF₂=CFOCF₂CF(CF₃)CF=CF₂ (3-5),

CF₂=CFOCF₂OCF=CF₂ (3-6),

CF₂-CFOC(CF₃)₂OCF=CF₂ (3-7),

CF₂=CFCF₂CF=CF₂ (3-8),

CF₂=CFCF₂CF₂CF=CF₂ (3-9).

In the fluoropolymer (I), the proportion of monomer units having a fluorinated alicyclic structure to the total monomer units (100 mol%) is preferably at least 20 mol%, more preferably at least 40 mol%, particularly preferably 100 mol%, from the viewpoint of the transparency of the fluoropolymer (I). The monomer units having a fluorinated alicyclic structure are monomer units formed by polymerization of a cyclic monomer or monomer units formed by cyclopolymerization of a diene monomer.

The fluoropolymer (I) has substantially no reactive groups (y). The term "having substantially no reactive groups (y)" means that the content of the reactive groups (y) in the fluoropolymer (I) is the detective limit or lower. Further, the fluoropolymer (I) preferably has substantially no reactive groups other than reactive groups (y).

The intrinsic viscosity of the fluoropolymer (I) is preferably from 0.1 to 1.0 dL/g. The intrinsic viscosity is interrelated to the molecular weight of the fluoropolymer. When the intrinsic viscosity is at least 0.1 dL/g, the fluoropolymer (I) has strong mechanical strength, whereby the micropattern will be hardly damaged, such being preferred. When the intrinsic viscosity is at most 1.0 dL/g, the fluoropolymer (I) during heating has good fluidity, whereby a micropattern is readily formed, such being preferred. The intrinsic viscosity of the fluoropolymer is particularly preferably from 0.15 to 0.75 dL/g.

In the present specification, the intrinsic viscosity of the fluoropolymer (I) is an intrinsic viscosity measured at 30°C in perfluoro(2-butyltetrahydrofuran). Such a viscosity is measured by using a Ubbelohde viscometer (capillary viscometer) in accordance with JIS-Z8803.

The fluoropolymer (I) is preferably a fluoropolymer having high transparency. The fluoropolymer (I) preferably has a transmittance of light with a wavelength of from 300 to 500 nm being at least 90%. The transmittance of light is the transmittance of light of the fluoropolymer (I) with a thickness of 100 µm.

The linear expansion coefficient of the fluoropolymer (I) is preferably at least 50 ppm/°C and less than 120 ppm/°C, more preferably at least 55 ppm/°C and less than 110 ppm/°C, furthermore preferably at least 60 ppm/°C and less than 100 ppm/°C. It is difficult to synthesize a fluoropolymer having a linear expansion coefficient of less than 50 ppm/°C. When the linear expansion coefficient of the fluoropolymer (I) is less than 120 ppm/°C, the strength of the fluoropolymer (I) will be sufficiently high, and the dimension stability of a micropattern will be sufficiently high.

The fluoropolymer (I) can be obtained by a known method. For example, a fluoropolymer (P) having a fluorinated alicyclic structure in its main chain or the fluoropolymer (II) having reactive groups (y) may be obtained by the after-mentioned method, and then the fluoropolymer (P) or the fluoropolymer (II) is contacted with fluorine gas, whereby it is possible to obtain a fluoropolymer (I) containing substantially no reactive groups (y).

The micropattern is preferably a micropattern constituted by a concavo-convex structure.

The convex portions in the concavo-convex structure are present in the form of lines or dots on the surface of the surface layer (B). The line-form convex portions may be linear lines, curved lines or bent lines. Further, the line-form convex portions may be present in parallel with one another to form stripes. The cross-sectional shape of the line-form convex portions (shape of the cross section in a direction perpendicular to the elongated direction) may, for example, be rectangular, trapezoidal, triangular or semi-circular.

The shape of the dot-form convex portions may be a columnar or conical shape with a bottom shape being rectangular, square, rhombic, hexagonal, triangular, circular or the like, a hemispherical shape or a polyhedral shape.

The average of widths of the bottom portions of the line-form convex portions is preferably from 1 nm to 500 µm, more preferably from 10 nm to 300 µm.

The average of lengths of the bottom faces of the dot-form convex portions is preferably from 1 nm to 500 µm, more preferably from 10 nm to 300 µm. However, in a case where the dots are elongated in the shape close to lines, the lengths of the bottom faces of the dot-form convex portions are meant for the lengths in a direction perpendicular to the elongated direction, and in other cases, they are meant for the maximum lengths of the bottom face shapes.

The average of heights of the convex portions is preferably from 1 nm to 500 µm, more preferably from 10 nm to 300 µm, particularly preferably from 10 nm to 10 µm.

The thickness of the surface layer (B) is preferably at least the height of the highest convex portions.

At a portion where the concavo-convex structure is present in a high density, the average of distances between adjacent convex portions (distances between the bottom portions) is preferably from 1 nm to 500 µm, more preferably from 10 nm to 300 µm.

The minimum dimension of such a convex structure is preferably at most 500 µm, and the lower limit thereof is preferably 1 nm.

The minimum dimension is meant for the minimum one among the width, length and height of such a convex structure.

### (Inter Layer (C))

An interlayer (C) is a layer made of a fluoropolymer (II) having a fluorinated alicyclic structure in its main chain and further having reactive groups (y) reactive with the functional groups (x).

The fluoropolymer (II) having a fluorinated alicyclic structure in its main chain is an amorphous or non-crystalline polymer.

The fluoropolymer (II) is the same polymer as in the above fluoropolymer (I) except that it has reactive groups (y).

The monomer units having a fluorinated alicyclic structure in the fluoropolymer (I) and the monomer units having fluorinated alicyclic structure in the fluoropolymer (II) are preferably the same monomer units since the interlayer (C) and the surface layer (B) are firmly bonded, and the durability of the mold is excellent.

In the fluoropolymer (II), the proportion of monomer units having a fluorinated alicyclic structure to the total monomer units (100 mol%) is preferably at least 20 mol%, more preferably at least 40 mol%, particularly preferably 100 mol% from the viewpoint of the transparency of the fluoropolymer (I).

The fluoropolymer (II) has reactive groups (y). The type of the reactive groups (y) is suitably selected depending upon the type of functional groups (x). In a case where the functional groups (x) are hydroxyl groups, oxiranyl groups or amino groups, the reactive groups (y) are preferably carboxyl groups, hydroxyl groups, silanol groups or derivatives thereof. The reactive groups (y) are particularly preferably carboxyl groups from the viewpoint that they have high reactivity with oxiranyl groups or amino groups and firm bonds can readily be formed. Further, in a case where the functional groups (x) are hydroxyl groups, silanol groups or C₁₋₄ alkoxysilane groups are preferred from the viewpoint that it is possible to readily form firm bonds.

The intrinsic viscosity of the fluoropolymer (II) is preferably from 0.1 to 1.0 dL/g. The intrinsic viscosity is interrelated to the molecular weight of the fluoropolymer. When the intrinsic viscosity is from 0.1 to 1.0 dL/g, the fluoropolymer (II) has high affinity with the fluoropolymer (I), and it is possible to obtain good adhesion between the surface layer (B) and the interlayer (C), such being preferred. The intrinsic viscosity of the fluoropolymer (II) is particularly preferably from 0.15 to 0.75 dL/g.

The intrinsic viscosity of the fluoropolymer (II) in the present specification is an intrinsic viscosity measured at 30°C in perfluoro(2-butyltetrahydrofuran). The viscosity is measured by using an Ubbelohde viscometer (capillary viscometer) in accordance with JIS-Z8803.

The presence or absence of the reactive groups (y) is preferably confirmed by an infrared spectrum. Further, it is preferred to quantify them as the number of reactive groups per 10⁶ carbon atom by a method disclosed in JP-A-60-240713 as the case requires.

The fluoropolymer (II) is preferably a fluoropolymer having high transparency. The fluoropolymer (II) preferably has a transmittance of light with a wavelength of from 300 to 500 nm being at least 90%. The transmittance of light is the transmittance of light of the fluoropolymer (II) with a thickness of 100 µm.

The linear expansion coefficient of the fluoropolymer (II) is preferably at least 50 ppm/°C and less than 120 ppm/°C, more preferably at least 55 ppm/°C and less than 110 ppm/°C, furthermore preferably at least 60 ppm/°C and less than 100 ppm/°C. In the case of a fluoropolymer having a linear expansion coefficient of less than 50 ppm/°C, it is difficult to carry out preparation. When the linear expansion coefficient of the fluoropolymer (II) is less than 120 ppm/°C, the strength of the fluoropolymer (II) will be sufficiently high, and the dimension stability of a micropattern will be sufficiently high.

The fluoropolymer (II) can be obtained by a known method. For example, the fluoropolymer (II) wherein the reactive groups (y) are carboxyl groups, may be obtained by polymerizing a diene monomer or a cyclic monomer in the presence of a hydrocarbon type radical polymerization initiator to obtain the fluoropolymer (P) having a fluorinated alicyclic structure in its main chain, then heat-treating the fluoropolymer (P) in an oxygen gas atmosphere, and further immersing it in water.

The fluoropolymer (II) wherein the reactive groups (y) are silanol groups, may be obtained in such a manner that carboxyl groups in the above fluoropolymer having carboxyl groups is esterified to be methyl carboxylate, and further methyl carboxylate is reacted with a silane coupling agent having an amino group or an oxiranyl group to form an amide bond, as disclosed in e.g. JP-A-4-226177.

The fluoropolymer (II) wherein the reactive groups (y) are hydroxyl groups, is obtainable by reducing carboxyl groups in the above fluoropolymer having carboxyl groups.

The thickness of the interlayer is preferably from 5 to 2,000 nm. If the thickness of the interlayer is at least 5 nm, it is possible to form a uniform film and thereby to obtain high adhesion, such being preferred. When the thickness of the interlayer is at most 2,000 nm, waste of materials can be cut down, such being preferred. The thickness of the interlayer is more preferably from 10 to 1,000 nm, particularly preferably from 20 to 500 nm.

### (Process for Producing Mold)

As a process for producing the mold of the present invention, a process may, for example, be mentioned wherein the following steps M1, M2, M3 and M4 are carried out sequentially.

### STEP M1

A step of applying a solution having a fluoropolymer (II) dissolved in a fluorinated solvent, on the surface side of a transparent substrate (A) having functional groups (x) on the surface, followed by drying to remove the fluorinated solvent to form an interlayer (C) made of the fluoropolymer (II) on the surface side of the transparent substrate (A) having functional groups (x) on the surface.

### STEP M2

A step of applying a solution having a fluoropolymer (I) dissolved in a fluorinated solvent, on the surface side of the interlayer (C), followed by drying to remove the fluorinated solvent to form a layer (B^{P}) made of the fluoropolymer (I) on the surface of the interlayer (C).

### STEP M3

A step of heating the layer (B^{P}) to at least the glass transition temperature of the fluoropolymer (I), or heating a master mold having a reversed pattern of the micropattern to at least said glass transition temperature, followed by pressing the reversed pattern of the master mold having on its surface the reversed pattern of the micropattern, on the layer (B^{P}) side.

### STEP M4

A step of cooling the layer (B^{P}) and the master mold to at most the glass transition temperature of the fluoropolymer (I), followed by releasing the master mold to form a surface layer (B) made of the fluoropolymer (I) having a transferred micropattern of the master mold formed, on the surface of the interlayer (C).

The drying in Step M1 is carried out at a temperature capable of forming chemical bonds between some or all of functional groups (x) of the transparent substrate (A) and some or all of reactive groups (y) of the fluoropolymer (II). The temperature for the drying is usually at least 100°C.

The drying temperature in Step M2 is preferably at a temperature of at least the glass transition temperature of the fluoropolymer (II) and at least a glass transition temperature of the fluoropolymer (I). When drying is carried out at such a temperature, the interlayer (C) and the layer (B^{P}) will be firmly bonded.

The mold of the present invention as explained above, has mechanical strength and dimension stability from the following reasons.

In the mold of the present invention, the transparent substrate (A) and the interlayer (C) are firmly bonded via chemical bonds. Further, the fluoropolymer (II) constituted by the interlayer (C) and the fluoropolymer (I) constituted by the surface layer (B) are made of fluoropolymers having a common structure, whereby the interlayer (C) and the surface layer (B) are firmly bonded. Therefore, such a mold has high mechanical strength and dimension stability based on the transparent substrate (A).

Further, the mold of the present invention is a laminate of the transparent substrate (A), the interlayer (C) made of the fluoropolymer (II) and the surface layer (B) made of the fluoropolymer (I), and therefore such a mold has high optical transparency.

Further, the surface layer (B) in the mold of the present invention is a layer made of the fluoropolymer (I), and therefore such a mold has such high release properties that it is possible to mold a high-viscous photocurable resin. Further, it is not necessary to apply a releasing agent thereon, and therefore such a mold has a highly precise micropattern, and the micropattern is less susceptible to contamination from the release agent, even when repeatedly used.

Further, the mold of the present invention has a difference in linear expansion coefficient (absolute value) of less than 30 ppm/°C between the linear expansion coefficient of the transparent substrate (A) and the linear expansion coefficient of the fluoropolymer (I), and therefore, in a step of forming the surface layer (B), it is possible to lower the stress formed between the surface layer (B) and the transparent substrate (A), whereby it is possible to suppress distortion of a micropattern formed by the stress. Further, also in a case of producing a large-scaled mold, there will be no problems caused from the stress.

### <Process for Producing Substrate having Transferred Micropattern>

As the process for producing a substrate having a transferred micropattern of the present invention, the following processes (a) to (c) may be mentioned.

### Process (a):

The process having the following steps (a-1) to (a-4).
(a-1) A step of disposing the photocurable resin 20 on the surface of the base material 30, as shown in Fig. 2.
(a-2) A step of pressing the mold 10 on the photocurable resin 20 so that the micropattern 18 of the mold 10 is in contact with the photocurable resin 20, as shown in Fig. 2.
(a-3) A step of irradiating the photocurable resin 20 with light in a state where the mold 10 is pressed on the photocurable resin 20 to cure the photocurable resin 20 thereby to obtain a cured product.
(a-4) A step of releasing the mold 10 from the cured product.

### Process (b):

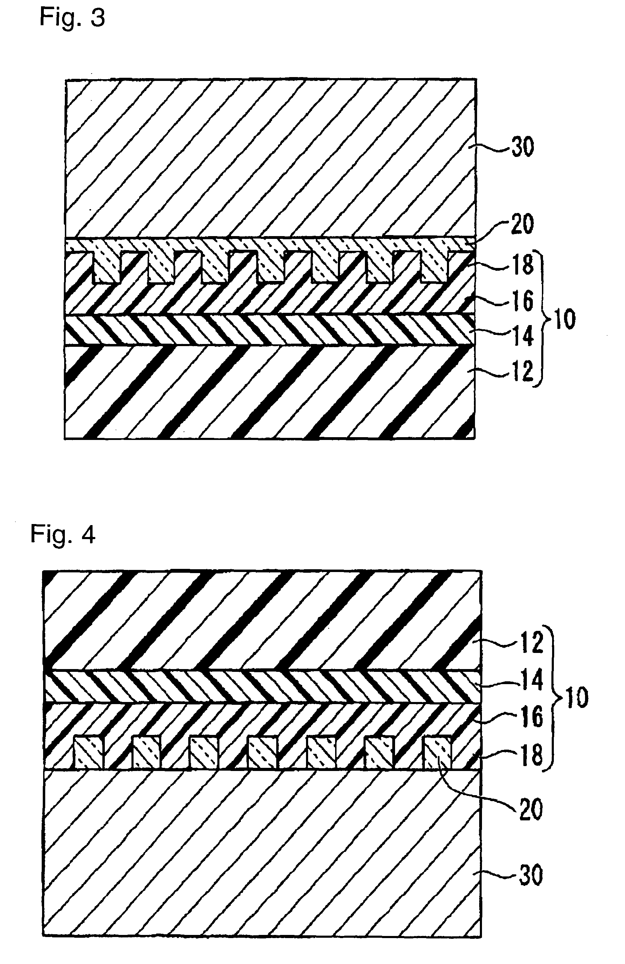

A process having the following steps (b-1) to (b-4).
(b-1) A step of disposing the photocurable resin 20 on the surface of the micropattern 18 of the mold 10, as shown in Fig. 3.
(b-2) A step of pressing the base material 30 on the photocurable resin 20 on the surface of the mold 10, as shown in Fig. 3.
(b-3) A step of irradiating the photocurable resin 20 with light in a state where the base material 30 is pressed on the photocurable resin 20 to cure the photocurable resin 20 thereby to obtain a cured product.
(b-4) A step of releasing the mold 10 from the cured product.

### Process (c):

A process having the following steps (c-1) to (c-4).
(c-1) A step of bringing the base material 30 and the mold 10 close to or in contact with each other so that the micropattern 18 of the mold 10 is located on the base material side.
(c-2) A step of filling the photocurable resin 20 between the base material 30 and the mold 10, as shown in Fig. 4.
(c-3) A step of irradiating the photocurable resin 20 with light in a state where the base material 30 and the mold 10 are close to or in contact with each other to cure the photocurable resin 20 thereby to obtain a cured product.
(c-4) A step of releasing the mold 10 from the cured product.

The photocurable resin is a resin from which a cured product is formed by curing the resin by irradiation with light.

The photocurable resin is preferably a photocurable resin containing a polymerizable compound and a photopolymerization initiator.

As the polymerizable compound, a compound having a polymerizable group, such as a polymerizable monomer, a polymerizable oligomer or a polymerizable polymer may be mentioned.

The photopolymerization initiator is a photopolymerization initiator which induces a radical reaction or an ionic reaction by light.

The light irradiation is usually carried out from the side of the mold 10. In a case where the substrate 30 has high optical transparency, the light irradiation may be carried out from the side of the substrate 30.

The range of the wavelength of light for irradiation may not particularly be limited so long as the mold of the present invention has high optical transparency. The wavelength of light in the irradiation is particularly preferably g-line (wavelength: 436 nm) or i-line (wavelength: 365 nm) of a high pressure mercury lamp since it is possible to cure a usual photocurable resin at a low temperature.

In the case of using a transparent resin as the transparent substrate (A), the light resistance is inferior to the case of using quartz or glass, and therefore light in the irradiation preferably contains no light within at least one portion of a wavelength of less than 300 nm, more preferably contains no light having a wavelength of less than 350 nm. When the light having a wavelength of less than 300 nm is not contained therein, yellowing or brittleness of the transparent substrate (A) hardly occurs, whereby it is possible to use the mold 10 for a longer term.

The temperature of the system in each step of the processes (a) to (c) is preferably at most the glass transition temperature of the fluoropolymer (I).

The base material having a transferred micropattern produced by the production process of the present invention has a transferred micropattern made of a cured product of a photocurable resin on the surface of the base material. The transferred micropattern is a reversed pattern of a micropattern of the master mold of the present invention.

The transferred micropattern is preferably a structure having a concave-convex constitution (hereinafter referred to also as a concave-convex structure) made of a cured product of the photocurable resin. The concave-convex structure may have a layer structure made of a continuous body having a concave-convex shape on its surface, or may have a structure having independent projections assembled. The former means a structure made of a layer of a cured product of the photocurable resin covering the base material surface, wherein the surface of the layer of the cured product of the photocurable resin has a concave-convex shape. The latter means a structure wherein many projections made of a cured product of the photocurable resin are independently present on the base material surface and constitute a concave-convex shape together with concave portions made of the base material surface. In either case, the convex portions (projections) are made of the cured product of the photocurable resin. Further, the concave-convex structure may have a structure wherein such two structures co-exist at different portions on the base material surface.

The base material having a transferred micropattern may be mentioned as follows.

Optical elements: A microlens array, an optical waveguide element, an optical switching, a fresnel zone plate, a binary optical element, a blaze optical element, a photonics crystal, etc.

Anti-reflection components: AR (anti reflection) coating component, etc.

Chips: Biochips, chips for µ-TAS (Micro-Total Analysis Systems), microreactor chips, etc.

Others: A recording medium, a display material, a carrier for a catalyst, a filter, a sensor component, etc.

According to the above-described process for producing a base material having a transferred micropattern of the present invention, since the mold of the present invention has high optical transparency, high release properties, high mechanical strength, high dimension stability and a highly precise micropattern and further has less distortion of the micropattern, it is possible to transfer a highly precise micropattern of the mold, and it is possible to reduce distortion of the transferred micropattern.

### EXAMPLES

Now, the present invention will be described in further detail with reference to Examples, but the present invention is by no means restricted to such specific Examples.

Examples 6, 7, 8, 12 and 13 are Examples of the present invention, and Examples 4, 5, 9 and 10 are Comparative Examples.

### (Intrinsic Viscosity)

The intrinsic viscosity of the fluoropolymer was measured in perfluoro(2-butyltetrahydrofuran) at 30°C by using a glass Ubbelohde tube.

### (Infrared Absorption Spectrum)

The infrared absorption spectrum of the fluoropolymer was measured by using a Fourier transformation infrared spectrometer (20DXC, manufactured by Nicolet).

### (Glass Transition Temperature)

The glass transition temperature of the fluoropolymer was measured under a condition at a heating rate of 10°C/min by using a differential scanning calorimeter (DSC3100, manufactured by Bruker AXS K.K.). Here, the glass transition temperature was measured in accordance with JIS K 7121:1987, the midpoint glass transition temperature was regarded as a glass transition temperature.

### (Linear Expansion Coefficient)

The linear expansion coefficient of the transparent substrate or the fluoropolymer was obtained by the following method.

The expansion amount was measured under a condition at a heating rate of 5°C/min by using a thermomechanical analyzer (TMA4000, manufactured by Bruker AXS K.K.) whereby a linear expansion coefficient in a range of from 40 to 100°C was obtained.

### (Heat Distortion Temperature)

The heat distortion temperature of the transparent substrate was measured under a load of 1.82 MPa by using a heat distortion tester (HD-PC, manufactured by Yasuda-Seiki-Seisakusho, Ltd.) in accordance with ASTM D648. (Transmittance of Light)

The transmittance at 436 nm and the transmittance at 365 nm of the transparent substrate, and the transmittance of light with a wavelength of from 300 to 500 nm of a film of the fluoropolymer, were measured by using a spectrophotometer (U-4100, manufactured by Hitachi High-Technologies Corporation).

### (Film Thickness)

The thickness of a layer of the fluoropolymer prepared by spin coating was measured by using an Optical Nano Gauge (C10178, manufactured by Hamamatsu Photonics K.K.). Refractive indices of the fluoropolymer (II-1) and the fluoropolymer (II-2) were respectively 1.34.

### EXAMPLE 1

### Production of fluoropolymer (P-1):

Into an autoclave (made of pressure resistant glass), 100 g of a compound (3-3), 0.5 g of methanol and 0.7 g of a compound (4-1) were added, and the compound (3-3) was polymerized by suspension polymerization to obtain a fluoropolymer (P-1). The fluoropolymer (P-1) is a polymer comprising monomer units represented by the following formula (α-1). The intrinsic viscosity of the fluoropolymer (P-1) was 0.34 dL/g. The glass transition temperature of the fluoropolymer (P-1) was 108°C. The linear expansion coefficient of the fluoropolymer (P-1) was 74 ppm/°C. The intrinsic viscosity of the fluoropolymer (P-1) was 0.35 dL/g.

CF₂=CFOCF₂CF₂CF=CF₂ (3-3),

((CH₃)₂CHOCOO)₂ (4-1).

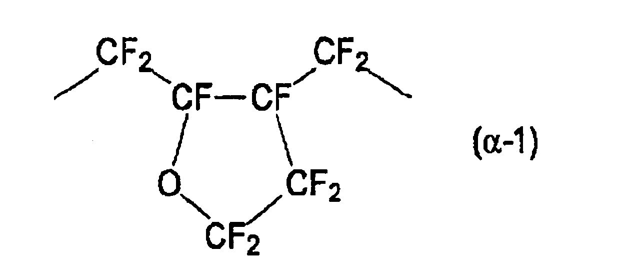

### EXAMPLE 2

Production of a fluoropolymer (hereinafter referred to as a fluoropolymer (I-1) comprising monomer units represented by the above (α-1) and having -CF₃ at its terminal:

The fluoropolymer (P-1) was put into an autoclave (made of nickel, internal capacity: 1L) and the interior of the autoclave was flushed three times with nitrogen gas and then evacuated to 4.0 kPa (absolute pressure). Into the autoclave, fluorine gas diluted to 14 vol% with nitrogen gas was introduced to 101.3 kPa, whereupon the internal temperature of the autoclave was maintained to be 230°C for 6 hours. The content of the autoclave was recovered to obtain the fluoropolymer (I-1). The infrared absorption spectrum of the fluoropolymer (I-1) was measured, whereby no peak attributable to a carboxyl group was confirmed. The fluoropolymer (I-1) was processed into a film having a thickness of 100 µm, and the transmittance of light with wavelengths of from 300 to 500 nm was measured, whereby it was found to be at least 95%. The linear expansion coefficient of the fluoropolymer (I-1) was 74 ppm/°C. The intrinsic viscosity of the fluoropolymer (I-1) was 0.33 dL/g. Preparation of solution composition (hereinafter referred to as composition 1) containing the fluoropolymer (I-1):

A perfluorotributylamine solution containing 9 mass% of the fluoropolymer (I-1) was prepared, and the solution was filtered through a membrane filter (pore diameter: 0.2 µm, made of polytetrafluoroethylene (hereinafter referred to as PTFE)) to obtain composition 1.

### EXAMPLE 3

Production of fluoropolymer (hereinafter referred to as fluoropolymer (II-1)) containing monomer units represented by the above (α-1) and having a reactive group (y) (carboxyl group) at its terminal:

The fluoropolymer (P-1) was heat-treated at 300°C for 1 hour in a hot air circulated oven in an atmospheric pressure, then immersed in ultrapure water at 110°C for 1 week and further dried at 100°C for 24 hours in a vacuum drier to obtain the fluoropolymer (II-1). The infrared absorption spectrum of the fluoropolymer (II-1) was measured, whereby a peak attributable to a carboxyl group was confirmed at 1,810 cm⁻¹. The polymer (II-1) was processed into a film having a thickness of 100 µm, whereupon the transmittance of light with a wavelength of from 300 to 500 nm was measured, whereby it was found to be at least 93%. The linear expansion coefficient of the fluoropolymer (II-1) was 74 ppm/°C. The intrinsic viscosity of the fluoropolymer (II-1) was 0.34 dL/g. Preparation of solution composition (hereinafter referred to as composition 2) containing the fluoropolymer (II-1):

A perfluorotributylamine solution containing 1 mass% of the fluoropolymer (II-1) was prepared, and the solution was filtered through a membrane filter (pore diameter: 0.2 µm, made of PTFE) to obtain composition 2.

### EXAMPLE 4

### Production of mold:

A quartz substrate (25 mm in length x 25 mm in width x 1 mm in thickness) was prepared as a transparent substrate. The properties of the transparent substrate are shown in Table 1.

An ethanol solution containing 0.5 mass% of a silane coupling agent having an amino group (KBE-903, manufactured by Shin-Etsu Chemical Co., Ltd.) and 5 mass% of water, was applied on the surface of a transparent substrate by means of a spin coating method. The quartz was washed with water and then heated and dried at 100°C for 30 minutes in a nitrogen stream to carry out surface treatment to introduce amino groups derived from the silane coupling agent to the surface of the transparent substrate.

Then, on the surface of the transparent substrate subjected to the surface treatment, the solution composition 2 was applied by a spin coating method and then heated and dried at 140°C for 1 hour to evaporate the perfluorotributylamine in the solution composition 2. At the same time, amino groups on the transparent substrate surface were chemically-bonded with the carboxyl groups of the fluoropolymer (II-1) to obtain a transparent substrate having an interlayer (thickness: 0.1 µm) made of the fluoropolymer (II-1) formed on its surface.

Then, the solution composition 1 was applied on the surface of the interlayer by means of a spin coating method and then heated and dried at 140°C for 2 hours to evaporate perfluorotributylamine in the solution composition 1. As a result, a transparent substrate having a layer made of the fluoropolymer (I-1) (total thickness of the fluoropolymer (II-1) and the fluoropolymer (I-1): 1.3 µm) formed as the outermost surface, was obtained.

As a master mold, a master mold made of nickel having, on its surface, a micropattern wherein columnar convex structures having a height of 750 nm and a diameter of 500 nm were disposed at 1,000 nm intervals, was prepared.

The master mold was heated to 130°C and pressed against the layer side made of the fluoropolymer (I-1) under 10 MPa (absolute pressure) for 5 minutes. After the master mold and the transparent substrate were cooled to a temperature of at most 80°C, the master mold was released to obtain a mold containing a transparent substrate, an interlayer and a surface layer, and having a micropattern on the surface of the surface layer. Production of substrate having transferred micropattern:

Two drops of the photocurable resin (PAK-01), manufactured by Toyo Gosei Kogyo Co., Ltd.) was applied on a silicon wafer to obtain a silicon wafer having a thin film (thickness: 1.5 µm) of the photocurable resin formed.

The mold was pressed on the thin film of the photocurable resin so that the micropattern of the mold was in contact with the thin film of the photocurable resin. From the mold side, ultraviolet light (wavelength: 365 nm, illuminance: 50 mW/cm²) was applied for 20 seconds to cure the photocurable resin. Then, the mold was released to obtain a silicon wafer having on its surface a transferred micropattern made of a cured product of the photocurable resin.

The transferred micropattern was observed by an electron microscope (acceleration voltage: 10 kV). At a center portion, columnar convex structures having a height of 700 nm and a diameter of 530 nm were disposed at 1,030 nm intervals, i.e. the micropattern of the master mold was reproduced. On the other hand, at a peripheral portion, convex structures were inclined. The reason may be such that the micropattern of the mold was distorted since the stress was formed at the peripheral portion of the mold by the difference in thermal expansion coefficient between the transparent substrate and the surface layer.

### EXAMPLE 5

### Production of mold:

As a transparent substrate, a PET sheet (25 mm in length x 25 mm in width x 2 mm in thickness) was prepared. The properties of the transparent substrate are shown in Table 1.

The production of a mold was attempted in the same manner as in Example 4 except that the PET sheet was used instead of the quartz substrate as a transparent substrate. However, in the step of heating and drying at 140°C after the solution composition 2 was applied thereon, the PET sheet was curved by distortion, whereby it was impossible to produce a mold. Even when the drying temperature was lowered to 110°C, the results were the same.

### EXAMPLE 6

### Production of mold:

As a transparent substrate A, a COP sheet (ZEONEX480, manufactured by Nippon Zeon Co., Ltd.) (25 mm in length x 25 mm in width x 2 mm in thickness) was prepared. The properties of the transparent substrate are shown in Table 2.

The surface of the COP sheet was preliminarily subjected to hydrophilic treatment. The hydrophilic treatment was carried out using a reactive ion etching device (RIE-10NR, manufactured by SAMCO Inc.) at an oxygen flow rate of 50 sccm under a pressure of 10 Pa at an output of 100 W for a treatment time of 2 minutes.

A mold comprising a transparent substrate, an interlayer and a surface layer and having a micropattern on the surface of the surface layer, was obtained in the same manner as in Example 4 except that, as the transparent substrate, the COP sheet subjected to hydrophilic treatment was used instead of the quartz substrate. Also in the heating and drying step and the heating and pressing step, the shape of the transparent substrate was maintained.

### Production of substrate having transferred micropattern:

A silicon wafer having on its surface a transferred micropattern made of a cured product of a photocurable resin was obtained in the same manner as in Example 4 except that the mold in Example 6 was used instead of the mold in Example 4.

The transferred micropattern was observed by an electron microscope. Columnar convex structures having a height of 700 nm and a diameter of 530 nm were disposed at 1,030 nm intervals, i.e. the micropattern of the master mold was reproduced. No inclined convex structure was observed. The reason may be such that since the difference in thermal expansion coefficient between the transparent substrate and the surface layer was small, no stress was formed and no prevent distortion of the micropattern of the mold took place.

### EXAMPLE 7

### Production of mold:

As a transparent substrate, a PC sheet (25 mm in length ×25 mm in width × 0.6 mm in thickness) was prepared. The properties of the transparent substrate are shown in Table 2.

The surface of the PC sheet was preliminarily subjected to hydrophilic treatment (nitrogen plasma treatment). The hydrophilic treatment was carried out at a nitrogen flow rate of 20 sccm under a pressure of 4 Pa at an output of 80 W for a treatment time of 2 minutes.

A mold comprising a transparent substrate, an interlayer and a surface layer and having a micropattern on the surface of the surface layer, was obtained in the same manner as in Example 4 except that, as a transparent substrate, the PC sheet subjected to hydrophilic treatment was used instead of the quartz substrate. Also in the heating and drying step and the heating and pressing step, the shape of the transparent substrate was maintained. Production of substrate having transferred micropattern:

A silicon wafer having on its surface a transferred micropattern made of a cured product of a photocurable resin was obtained in the same manner as in Example 4 except that the mold in Example 7 was used instead of the mold in Example 4.

The transferred micropattern was observed by an electron microscope. Columnar convex structures having a height of 700 nm and a diameter of 530 nm were disposed at 1,030 nm intervals, i.e. the micropattern of the master mold was reproduced. No inclined convex structure was observed. The reason may be such that since the difference in linear expansion coefficient between the transparent substrate and the surface layer was small, no stress was formed and no distortion of the micropattern of the mold took place.

### EXAMPLE 8

### Production of mold:

As a transparent substrate, a PC sheet (25 mm in length × 25 mm in width × 0.6 mm in thickness) was prepared. The properties of the transparent substrate are shown in Table 2. The PC sheet was used as it was without being subjected to hydrophilic treatment.

A primer (FS-10, manufactured by Shin-Etsu Chemical Co., Ltd.) having oxiranyl groups was diluted 20 times with a mixed solution of butyl acetate and 2-propanol at a weight ratio of 5:9 to obtain a primer coating fluid. The primer coating fluid was applied on the surface of a transparent substrate by using a spin coating method, followed by heating and drying at 100°C for 30 minutes in a nitrogen flow to carry out surface treatment to introduce the oxiranyl groups to the surface of the transparent substrate.

Then, on the surface of the transparent substrate subjected to the surface treatment, the solution composition 2 was applied by a spin coating method and then heated and dried at 140°C for 1 hour to evaporate perfluorotributylamine in the solution composition 2. At the same time, oxiranyl groups on the transparent substrate surface were chemically-bonded with the carboxyl groups of the fluoropolymer (II-1) to obtain a transparent substrate having an interlayer (thickness: 0.15 µm) made of the fluoropolymer (II-1) formed on its surface.

Then, the solution composition 1 was applied on the surface of the interlayer by a spin coating method and then heated and dried at 140°C for 2 hours to evaporate perfluorotributylamine in the solution composition 1.

As a result, a transparent substrate having a layer (total thickness of the fluoropolymer (II-1) and the fluoropolymer (I-1); 1.35 µm) made of the fluoropolymer (I-1) formed as the outermost surface, was obtained.

A micropattern was formed in the same manner as in Example 4 to obtain a mold comprising a transparent substrate, an interlayer and a surface layer and having a micropattern on the surface of the surface layer. Also in the heating and drying step and the heating and pressing step, the shape of the transparent substrate was maintained.

### Production of substrate having transferred micropattern:

A silicon wafer having on its surface a transferred micropattern made of a cured product of a photocurable resin was obtained in the same manner as in Example 4 except that the mold in Example 8 was used instead of the mold in Example 4.

The transferred micropattern was observed by an electron microscope, and it was found that the micropattern of the master mold was reproduced in the same manner as in Example 7. No inclined convex structure was observed. The reason may be such that since a difference in thermal expansion coefficient between the transparent substrate and the surface layer was small, no stress was formed and no distortion of the micropattern of the mold took place.

### EXAMPLE 9

As a transparent substrate, a PC sheet (25 mm in length × 25 mm in width × 0.6 mm in thickness) was prepared. The properties of the transparent substrate are shown in Table 1. A PC sheet was used as it was, without being subjected to hydrophilic treatment. No surface treatment to introduce functional groups to the surface of the transparent substrate, was carried out.

The production was carried out in the same manner as in Example 4 except that the transparent substrate was used, and as a result in the step of releasing the mold from the master mold, delamination occurred between the transparent substrate and the interlayer.

### EXAMPLE 10

### Production of mold:

As a transparent substrate, a COP sheet (ZEONEX480, manufactured by Nippon Zeon Co., Ltd.) (25 mm in length x 25 mm in width x 2 mm in thickness) was prepared. The properties of the transparent substrate are shown in Table 1.

The production was carried out in the same manner as in Example 6 except that the solution composition 1 was used instead of the solution composition 2, and as a result, in the step of releasing the mold from the master mold, delamination occurred between the transparent substrate and the interlayer.

### EXAMPLE 11

Production of fluoropolymer (hereinafter referred to as fluoropolymer (II-2)) comprising monomer units represented by the above (α-1) and having a reactive group (y) (silanol group (alkoxysilane group)) at its terminal:

A carboxyl group of the fluoropolymer obtained in Example 3 was esterified to be -COOCH₃, 3.5 g of such a polymer was dissolved in 46.5 g of perfluoro(2-butyltetrahydrofuran), and 0.1 g of γ-aminopropyl trimethoxysilane was added to such a solution. The interior of the system was flushed with nitrogen, followed by stirring at room temperature for 3 hours to obtain the fluoropolymer (II-2).

An infrared absorption spectrum of the polymer obtained was measured, and it was found that no absorption by -COOCH₃ which was present in an original fluoropolymer, was observed at 1,800 cm⁻¹, but the absorption by -CONH- was observed at 1,730 cm⁻¹. The polymer (II-2) was processed into a film having a thickness of 100 µm, and the transmittance of light with a wavelength of from 300 to 500 nm was measured, and as a result it was found to be at least 92%. The linear expansion coefficient of the fluoropolymer (II-2) was 74 ppm/°C. Further, the intrinsic viscosity of the fluoropolymer (II-2) was 0.32 dL/g.

### Preparation of solution composition (hereinafter referred to as composition 3) containing fluoropolymer (II-2):

A perfluorotributylamine solution containing 1 mass% of the fluoropolymer (II-2) was prepared, and the solution was filtered through a membrane filter (pore diameter: 0.2 µm, made of PTFE) to obtain composition 3.

### EXAMPLE 12

### Preparation of solution composition (hereinafter referred to as composition 3) containing fluoropolymer (II-2):

A perfluorotributylamine solution containing 1 mass% of the fluoropolymer (II-2) was prepared, and the solution was filtered through a membrane filter (pore diameter: 0.2 µm, made of PTFE) to obtain composition 3.

A perfluorotributylamine solution containing 1 mass% of the fluoropolymer (II-2) was prepared, and the solution was filtered through a membrane filter (pore diameter: 0.2 µm, made of PTFE) to obtain composition 3. Production of mold:

As a transparent substrate, a PC sheet (25 mm in length x 25 mm in width x 0.6 mm in thickness) was prepared. The properties of the transparent substrate are shown in Table 2.

The surface of the PC sheet was preliminarily subjected to hydrophilic treatment (oxygen plasma treatment). The hydrophilic treatment was carried out using a reactive ion etching device at an oxygen flow rate of 50 sccm under a pressure of 10 Pa at an output of 100 W for a treatment time of 10 seconds. By such treatment, hydroxyl groups were formed on the surface of the PC sheet.

Then, on the surface of the transparent substrate subjected to such surface treatment, the solution composition 3 was applied by means of a spin coating method, followed by heating and drying at 140°C for 1 hour to evaporate perfluorotributylamine in the solution composition 3. At the same time, hydroxyl groups on the surface of the transparent substrate were chemically-bonded with silanol groups of the fluoropolymer (II-2) to obtain a transparent substrate having an interlayer (thickness: 0.1 µm) made of the fluoropolymer (II-2) formed on its surface.

Then, the solution composition 1 was applied on the surface of the interlayer by means of a spin coating method and then heated and dried at 140°C for 2 hours to evaporate perfluorotributylamine in the solution composition 1. As a result, a transparent substrate having a layer (total thickness of the fluoropolymer (II-2) and the fluoropolymer (I-1): 1.2 µm) made of the fluoropolymer (I-1) formed as the outermost surface, was obtained.

A silicon wafer having on its surface a transferred micropattern made of a cured product of a photocurable resin was obtained in the same manner as in Example 4 except that the mold in Example 12 was used instead of the mold in Example 4.

The transferred micropattern was observed by an electron microscope, and it was found that the micropattern of the master mold was reproduced like in Example 7. No inclined convex structure was observed. The reason may be such that since a different in thermal expansion coefficient between the transparent substrate and the surface layer was small, no stress was formed and no distortion of the micropattern of the mold took place.

### EXAMPLE 13

### Production of mold:

As a transparent substrate, a polymethyl methacrylate (hereinafter referred to as PMMA) sheet (25 mm in length x 25 mm in width x 2 mm in thickness) as of an acryl resin was prepared. The properties of the transparent substrate are shown in Table 2. The PMMA sheet was used as it was without being subjected to hydrophilic treatment.

A primer (FS-10, manufactured by Shin-Etsu Chemical Co., Ltd.) having oxiranyl groups were diluted 20 times with a mixed solution of butyl acetate and 2-propanol in a weight ratio of 5:9 to obtain a primer coating fluid. The primer coating fluid was applied on the surface of the transparent substrate by means of a spin coating method, followed by heating and drying at 100°C for 30 minutes to carry out surface treatment to introduce the oxiranyl groups to the surface of the transparent substrate.

Then, on the surface of the transparent substrate subjected to the surface treatment, the solution composition 2 was applied by a spin coating method and then heated and dried at 110°C for 1 hour to evaporate perfluorotributylamine in the solution composition 2. At the same time, oxiranyl groups on the surface of the transparent substrate were chemically-bonded with the carboxyl groups of the fluoropolymer (II-1) to obtain a transparent substrate having an interlayer (thickness: 0.05 µm) made of the fluoropolymer (II-1), formed on its surface.

Then, the solution composition 1 was applied on the surface of the interlayer by means of a spin coating method and then heated and dried at 110°C for 2 hours to evaporate perfluorotributylamine in the solution composition 1. As a result, a transparent substrate having a layer (total thickness of the fluoropolymer (II-1) and the fluoropolymer (I-1): 1.2 µm) made of the fluoropolymer (I-1) formed as the outermost surface, was obtained.

As a master mold, a nickel-made master mold having on its surface a micropattern wherein columnar convex structures having a height of 750 nm and a diameter of 500 nm were disposed at 1,000 nm intervals, was prepared.

The master mold was heated to 120°C and then pressed against the layer side made of the fluoropolymer (I-1) under a pressure of 10 MPa (absolute pressure) for 2 minutes. After cooling the master mold and the transparent substrate to a temperature of at most 50°C, the master mold was released to obtain a mold comprising a transparent substrate, an interlayer and a surface layer and having a micropattern on the surface of the surface layer. Also in the heating and drying step and the heating and pressing step, the shape of the transparent substrate was maintained.

### Production of substrate having transferred micropattern:

A silicon wafer having on its surface a transferred micropattern made of a cured product of a photocurable resin was obtained in the same manner as in Example 4 except that the mold having a micropattern on the surface of the above surface layer was used.

The transferred micropattern was observed by an electron microscope, and it was found that the micropattern of the master mold was reproduced like in Example 7. No inclined convex structure was observed. The reason may be such that since a difference in thermal expansion coefficient between the transparent substrate and the surface layer was small, no stress was formed and no distortion of the micropattern of the mold took place.

**TABLE 1**

| | Ex. 4 | Ex. 5 | Ex. 9 | Ex. 10 |
|---|---|---|---|---|
| Transparent substrate | Quartz | PET | PC | COP |
| Heat distortion temperature of transparent substrate (°C) | >300 | 80 | 124 | 123 |
| Linear expansion coefficient of transparent substrate (ppm/°C) | <1 | 70 | 60 | 70 |
| Difference in linear expansion coefficient between transparent substrate and fluoropolymer (I) (ppm/°C) | >73 | 4 | 14 | 4 |
| Thickness of transparent substrate (mm) | 0.5 | 2 | 0.6 | 2 |
| Transmittance at a wavelength of 436 nm of transparent substrate (%) | 93 | 89 | 89 | 91 |
| Transmittance at a wavelength of 365 nm of transparent substrate (%) | 93 | 74 | 85 | 91 |
| Functional group (x) | Amino group | Amino group | - | Amino group |
| Reactive group (y) | Carboxyl group | Carboxyl group | Carboxyl group | - |
| Production of mold | Possible | Impossible (distorted) | Impossible (delaminated) | Impossible (delaminated) |
| Shape of micropattern | Partly distorted | - | - | - |

**TABLE 2**

| | Ex. 6 | Ex. 7 | Ex. 8 | Ex. 12 | Ex. 13 |
|---|---|---|---|---|---|
| Transparent substrate | COP | PC | PC | PC | PMMA |
| Heat distortion temperature of transparent substrate (°C) | 123 | 124 | 124 | 124 | 102 |
| Linear expansion coefficient of transparent substrate (ppm/°C) | 70 | 60 | 60 | 60 | 68 |
| Difference in linear expansion coefficient between transparent substrate and fluoropolymer (I) (ppm/°C) | 4 | 14 | 14 | 14 | 6 |
| Thickness of transparent substrate (mm) | 2 | 0.6 | 0.6 | 0.6 | 2 |
| Transmittance at a wavelength of 436 nm of transparent substrate (%) | 91 | 89 | 89 | 89 | 92 |
| Transmittance at a wavelength of 365 nm of transparent substrate (%) | 91 | 85 | 85 | 85 | 37 |
| Functional group (x) | Amino group | Amino group | Oxiranyl group | Hydroxyl group | Oxiranyl group |
| Reactive group (y) | Carboxyl group | Carboxyl group | Carboxyl group | Silanol group | Carboxyl group |
| Production of mold | Possible | Possible | Possible | Possible | Possible |
| Shape of micropattern | Not distorted | Not distorted | Not distorted | Not distorted | Not distorted |

### INDUSTRIAL APPLICABILITY

The mold of the present invention is useful as a mold for nano imprinting employing a photocurable resin. A base material having a transferred micropattern, obtainable by using the mold of the present invention, is useful for e.g. an optical element (a microlens array, an optical waveguide, an optical switching, a fresnel zone plate, a binary optical element, a blaze optical element or a photonics crystal), an anti-reflection filter, a biochip, a recording medium, a display material or a carrier for catalysts.

The entire disclosure of Japanese Patent Application No. 2007-137699 filed on May 24, 2007 including specification, claims, drawings and summary is incorporated herein by reference in its entirety.

## Claims

1. A mold having a micropattern for molding a photocurable resin, which comprises the following transparent substrate (A); the following surface layer (B); and the following interlayer (C) which is formed on the surface of the transparent substrate (A) and present between the transparent substrate (A) and the surface layer (B):
Transparent substrate (A): a transparent substrate having functional groups (x) on the surface before the interlayer (C) is formed on its surface and having chemical bonds based on the above functional groups (x) and the following reactive groups (y) on the surface after the interlayer (C) is formed on its surface, having a difference in linear expansion coefficient (absolute value) of less than 30 ppm/°C from the linear expansion coefficient of the following fluoropolymer (I), and further having a heat distortion temperature of from 100 to 300°C
Surface layer (B): a layer made of a fluoropolymer (I) having a fluorinated alicyclic structure in its main chain and having substantially no reactive groups (y) as mentioned below, and having a micropattern on its surface
Interlayer (C): a layer made of a fluoropolymer (II) having a fluorinated alicyclic structure in its main chain and further having reactive groups (y) reactive with the functional groups (x).

2. The mold according to Claim 1, wherein the transparent substrate (A) has a flat plate-shape and has a thickness of at least 0.4 mm and less than 20 mm.

3. The mold according to Claim 1 or 2, wherein the micropattern is constituted by a concavo-convex structure wherein the average height of convex portions in the concavo-convex structure is from 1 nm to 500 µm.

4. The mold according to any one of Claims 1 to 3, wherein the functional groups (x) are hydroxyl groups, amino groups or oxiranyl groups, and the reactive groups (y) are carboxyl groups.

5. The mold according to any one of Claims 1 to 3, wherein the functional groups (x) are hydroxyl groups, and the reactive groups (y) are silanol groups or C₁₋₄ alkoxysilane groups.

6. The mold according to any one of Claims 1 to 5, wherein the fluoropolymer (I) has an intrinsic viscosity of from 0.1 to 1.0 dL/g.

7. The mold according to any one of Claims 1 to 6, wherein the fluoropolymer (II) has an intrinsic viscosity of from 0.1 to 1.0 dL/g.

8. The mold according to any one of Claims 1 to 7, wherein the transparent substrate (A) has a transmittance of light within at least one portion of a wavelength of from 300 to 500 nm being at least 75%.

9. The mold according to any one of Claims 1 to 8, wherein the transparent substrate (A) is a transparent substrate having functional groups (x) introduced to the surface by surface treatment.

10. A process for producing a mold having a micropattern for molding a photocurable resin, which comprises,
a step of coating the surface of the transparent substrate (A) having functional groups (x) on the surface, with a solution obtained by dissolving the following fluoropolymer (II) in a fluorine-containing solvent, followed by drying to form an interlayer (C) made of the fluoropolymer (II),
a step of coating the surface of the interlayer (C) with a solution obtained by dissolving the following fluoropolymer (I) in a fluorine-containing solvent, followed by drying to form a layer (B^{P}) made of the fluoropolymer (I),
a step of pressing a reversed pattern of a master mold having on its surface the reversed pattern of the micropattern, on the layer (B^{P}), and
a step of releasing the master mold from the layer (B^{P}) to form a surface layer (B) made of the fluoropolymer (I) having a transferred micropattern of the master mold:
Transparent substrate (A): a transparent substrate having functional groups (x) on the surface on which the interlayer (C) is to be formed, having a difference in linear expansion coefficient (absolute value) of less than 30 ppm/°C from the linear expansion coefficient of the following fluoropolymer (I), and further having a heat distortion temperature of from 100 to 300°C
Fluoropolymer (I): a fluoropolymer having a fluorinated alicyclic structure in its main chain and having substantially no reactive groups (y)
Fluoropolymer (II): a fluoropolymer having a fluorinated alicyclic structure in its main chain and further having reactive groups (y) reactive with the functional groups (x).

11. A process for producing a base material having a transferred micropattern, which comprises,
a step of disposing a photocurable resin on the surface of a base material,
a step of pressing the mold as defined in any one of Claims 1 to 9 on the photocurable resin so that the micopattern of the mold is in contact with the photocurable resin,
a step of irradiating the photocurable resin with light in a state where the mold is pressed on the photocurable resin to cure the photocurable resin thereby to obtain a cured product, and
a step of releasing the mold from the cured product.

12. A process for producing a base material having a transferred micropattern, which comprises,
a step of disposing a photocurable resin on the surface of a micropattern of the mold as defined in any one of Claims 1 to 9,
a step of pressing a base material on the photocurable resin on the surface of the mold,
a step of irradiating the photocurable resin with light in a state where the base material is pressed on the photocurable resin to cure the photocurable resin thereby to obtain a cured product, and
a step of releasing the mold from the cured product.

13. A process for producing a base material having a transferred micropattern, which comprises,
a step of bringing a base material and the mold as defined in any one of Claims 1 to 9 close to or in contact with each other so that the micropattern of the mold is located on the base material side,
a step of filling a photocurable resin between the base material and the mold,
a step of irradiating the photocurable resin with light in a state where the base material and the mold are close to or in contact with each other to cure the photocurable resin thereby to obtain a cured product, and
a step of releasing the mold from the cured product.
